Europäisches Patentamt

European Patent Office

Office européen des brevets

(11) Publication number: **0 424 758 A2**

# EUROPEAN PATENT APPLICATION

(21) Application number: 90119649.3

(51) Int. Cl.5: **G06F 9/46**

(22) Date of filing: **13.10.90**

(30) Priority: **23.10.89 US 425628**

(43) Date of publication of application:
**02.05.91 Bulletin 91/18**

(84) Designated Contracting States:
**DE FR GB**

(71) Applicant: **INTERNATIONAL BUSINESS MACHINES CORPORATION**

**Armonk, NY 10504(US)**

(72) Inventor: **Dono, Nicholas Richard,
17 Aspen Road, Hopewell Junction,
New York(US)**
Inventor: **Houston, John Scott,
RR3, Box 24A, Fishkill,
New York 12524(US)**
Inventor: **Meltzer, Cliffort Bennet,
2-1 Stevens Drive, Ossining,
New York 10562(US)**
Inventor: **Niebuhr, Kenneth Ellsworth,
RD3 Holly Hill Lane, Katonah,
New York 10536(US)**
Inventor: **Paradise, Edward Davis,
Tammany Hall Road, Carmel,
New York 10512(US)**

(74) Representative: **Blutke, Klaus, Dipl.-Ing.
IBM Deutschland GmbH Intellectual Property
Dept. Schönaicher Strasse 220
W-7030 Böblingen(DE)**

(54) Managing serially reusable resources.

(57) This invention deals with a method of sharing serially reusable resources among N processes. With this invention circular arrays are allocated such that each circular array is shared between a pair of processes. Each shared array has at least N + 1 elements. Permission grants are added to corresponding elements in the circular arrays. Each permission grant has a permission flag which when set indicates that a resource may be used. The permission grant also has a resource handle which indicates which particular resource may be used. A permission grant is added to a respective element by entering a resource handle, setting the permission flag and adjusting an add reference. A permission grant is retrieved from an array element by first testing if the permission flag therein is set. If the flag is set then the resource handle in the element is accessed. It is the handle that indicates the actual resource that may be used by a respective retrieve process. An add and a retrieve reference are used to reference elements of a circular array so that permission grants may be added and retrieved respectively. Each reference is used by only one process and operates independently of the other references.

## MANAGING SERIALLY REUSABLE RESOURCES

This invention is specifically directed to sharing serially reusable resources among a group of processes in the field of data processing.

A common problem in the use of multiple processes is an efficient means of sharing resources or facilities that can only be used by one process at a time. Such processes can execute on separate processors as well as a single processor. Access to these serially reusable resources must be controlled or restricted to a single using process during any given time interval.

The general operating systems literature {ref: Tanenbaum, A.S., "Operating Systems: Design and Implementation", Prentice-Hall, Inc., pp. 51-80, 1987} contains a number of classical solutions to share resources among a set of processes. The methods of providing mutual exclusion or concurrency control include critical sections, disabling interrupts, lock variables, test and set instructions, semaphores, event counters, message passing and monitors. These methods require isolating operations while a shared variable is tested and conditionally modified either by stopping all competing processes or serializing operations through an independent activity. These complex synchronization methods are necessary to handle the general case where the flow of resource access is arbitrary or unknown.

An interesting and important class of applications, however, does allow the specification of the flow of resource accesses. As an example, in the field of communication, it is common for a process on a host processor to transmit and receive data packets in shared buffers using processes on communication adapters' processors. Here, for transmission, the host process first loads the data into a shared buffer and grants access to that buffer to an adapter process for subsequent transmission over a communication line. In a similar fashion, an adapter process can grant access to buffers containing received data packets to a host process.

For this simpler class of applications, on lower speed communication lines when the resource to be shared is data, copying the data from one process's memory to another's is acceptable. Such concepts as IO-mapped and memory-mapped transfers have been implemented on many adapter products, using DMA controllers, string operations or hardware fifos. All these techniques require copying of the data. However, as data rates and buffer sizes increase, copying becomes more and more of a performance limitation.

By delegating one process to manage the resource access, copying of the data can be avoided. This method requires the other sharing processes to request grants to the resources from the managing process. This is similar to the monitor approach for concurrency control. The time spent handling the request can be a performance handicap when compared to our invention.

By delegating special hardware, typically a fifo, to manage the resource access, copying of the data can also be avoided. This method requires the other sharing processes to obtain grants to the resources from the managing hardware. This is also similar to the monitor approach for concurrency control. The approach can be expensive in terms of cost, physical space and power compared to our invention.

It is an object of this invention to provide an efficient method of sharing serially reusable resources among a set of processes.

This object of the invention is accomplished by the features of the main claims.

Accordingly, this invention provides a method of sharing N serially reusable resources among a set of independent processes. This method provides, first, for allocating circular arrays, each of which is shared between a pair of processes, one of which is an add process and the other a retrieve process. Further, each circular array has at least N + 1 array elements. Second, permission grants are added to the array elements by the corresponding add process, using the respective add reference for the appropriate circular array. Each permission grant has a permission flag and resource handle with the permission flag indicating permission to retrieve a handle when the flag is set and with the handle indicating which one of the resources may be used by the respective retrieve process. Each permission grand is added by entering a resource handle in a referenced array element, by setting the permission flag in the element and by adjusting the unshared add reference. Finally, permission grants are retrieved from corresponding referenced elements of the circular array by the retrieve process. Each permission grant is retrieved by testing whether a permission flag is set in a referenced array element. If the permission flag is set, then the permission grant is retrieved by accessing its resource handle, by resetting the permission flag and adjusting the corresponding unshared retrieve reference. It is the accessed handle which indicates the particular resource the retrieving process may use.

An alternative method is also provided with this invention, and this alternative is basically the same as that described above except that a permission flag in an element following the referenced element in a circular array is reset when a permission grand is added to the referenced element. Thus, the step of retrieving a permission grant does not require resetting the permission flag by a retrieve process.

For a better understanding of the present invention reference is made to the following description taken in connection with the accompanying drawings.

FIGS. 1A-D schematically illustrate examples of flow paths between processes.

FIG. 2 is a schematic illustration of a circular array and the elements therein.

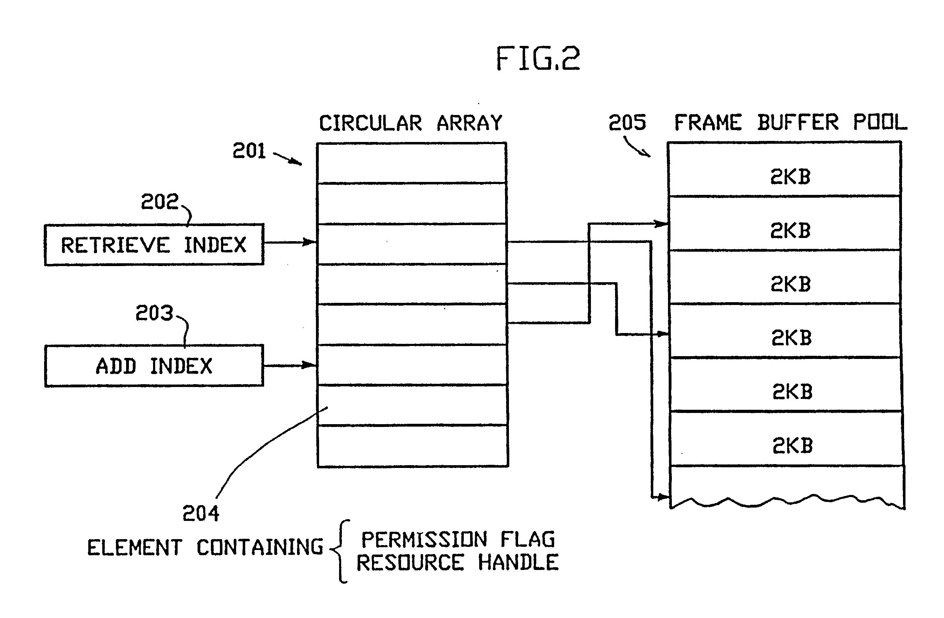

FIG. 2 also shows an example of serially reusable resources, with each resource labeled 2KB. Also shown is a corresponding add and retrieve reference for the circular array.

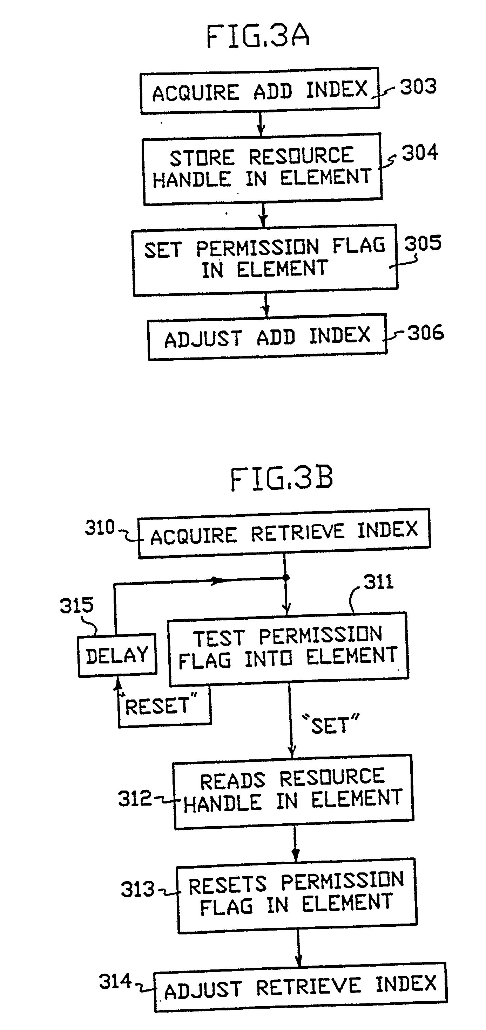

FIG. 3A is a flow chart showing the steps to be executed by the add process in order to add a resource to the circular array for Method A of this invention.

FIG 3B is a flow chart showing the steps to be executed by the retrieve process in order to retrieve a resource from the circular array for Method A of this invention.

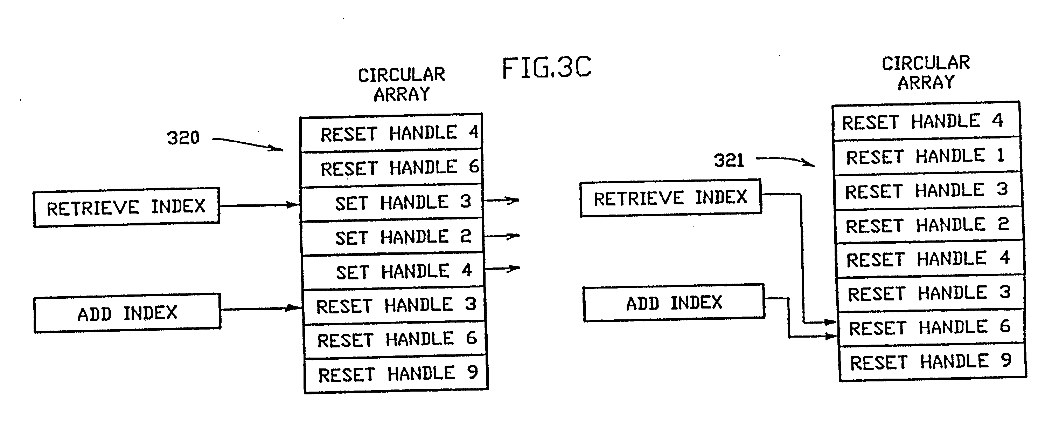

FIG. 3C schematically illustrates two circular arrays with their respective add and retrieve references. Also shown are the permission flags and resource handles in the elements of the circular arrays, corresponding to Method A of this invention.

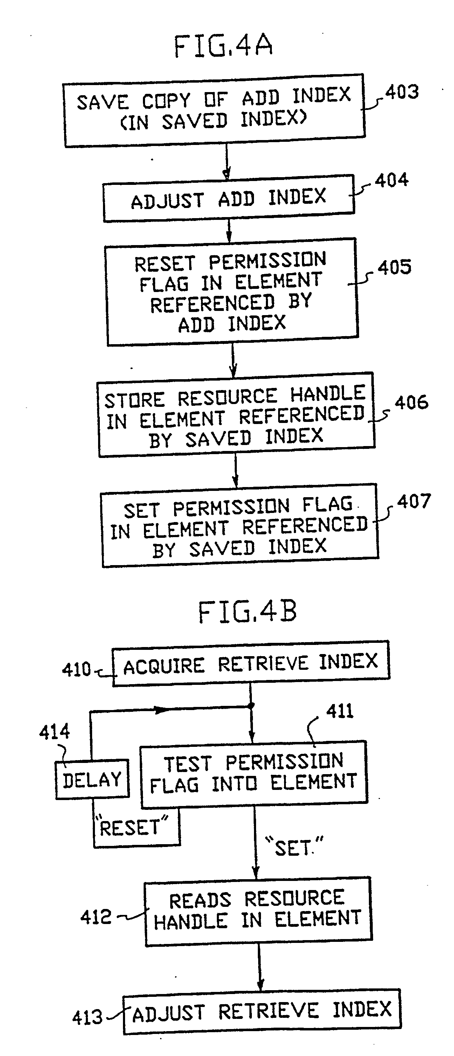

FIG. 4A is the flow chart showing the steps to be executed by the add process in order to add . a resource to the circular array for Method B of this invention.

FIG. 4B is the flow chart showing the steps to be executed by the retrieve process in order to retrieve a resource from the circular array for Method B of this invention.

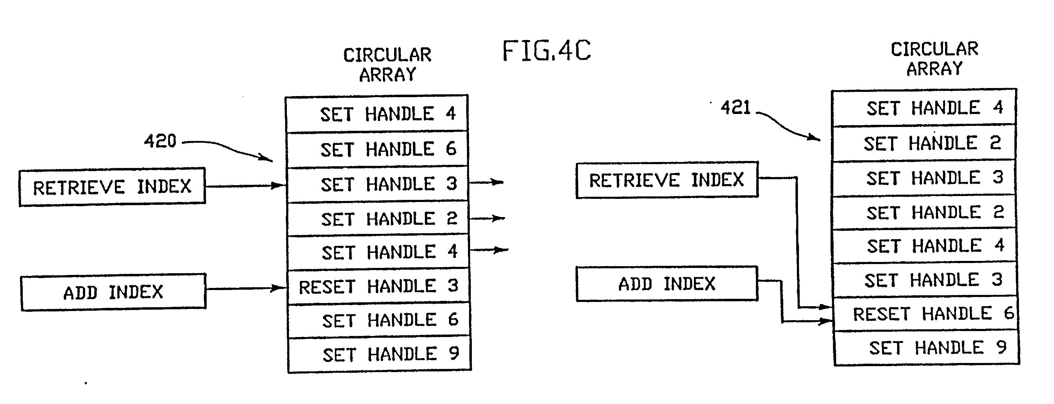

FIG. 4C schematically illustrates two circular arrays with their respective add and retrieve references. Also shown are the permission flags and resource handles in the elements of the circular arrays, corresponding to Method B of this invention.

## Description of the Preferred Embodiment

This invention deals with the problem of sharing serially reusable resources among a set of processes. Examples of such resources for typical applications are data and control buffers, printers and communication lines. Sharing is accomplished by passing access or control of these resources between pairs of these processes. Although the processes may execute on a single processor, processes which are executing on separate processors stand to benefit the most from this invention.

The invention necessitates the identification of resource flow paths required by the processes, where a resource flow path is a logical, unidirectional connection between a pair of processes based on the anticipated need to pass access of resources from one process (the add process) to another (the retrieve process).

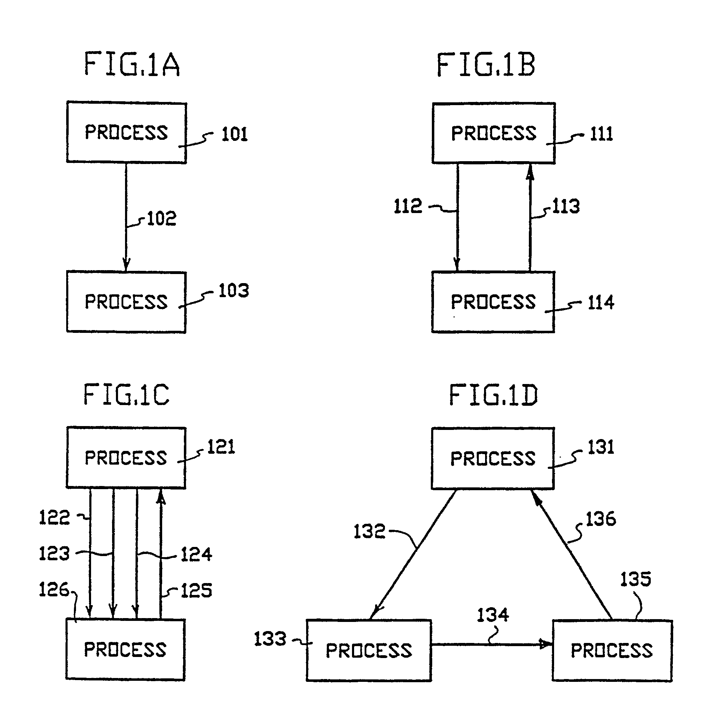

Examples of these flow paths are depicted in FIGS. 1A, 1B, 1C, and 1D. FIG. 1A shows a unidirectional flow path 102 between a single pair of processes. Since there is no return flow path, the process 101 cannot reuse the resources which have been passed to the process 103. FIG. 1B shows two flow paths 112 and 113 enabling both processes, 111 and 114, to continuously reuse the resources as access to these resources is passed back and forth. FIG. 1C shows multiple flow paths, 122-124, going from process 121 to process 126. These multiple, parallel flow paths, 122-124, can be used to handle applications which have a need for multiple priorities or classes of service. FIG. 1D shows a flow of resources among a multiplicity of processes, 131, 133 and 135, where each process uses the resource in turn. Other combinations of possible flow paths can be similarly constructed. Continuous reuse of the resources is possible in the case where every process has at least one flow path for which it is the add process and at least one flow path for which it is the retrieve process.

A circular array is set up in shared memory for each flow path between pairs of processes. FIG. 2 depicts a circular array 201 (including its elements 204) for controlling access to a pool of buffers 205, as an example. The array elements each contain space for a permission grant which, in turn, consists of a permission flag and a resource handle. The resource handle is an identifying reference to the resource, such as a pointer (memory address) to a data buffer or an index into an array of control buffers or a printer name, etc. The permission flag indicates resource access has been granted to the accompanying resource handle by the add process. When the permission flag is set, the retrieve process is allowed to access the resource through its handle.

The number of elements in the circular array must exceed the maximum number of resources to be controlled by the array. For example, if 200 data buffers are to be shared, the size of the circular array must be set to at least 201. FIG. 2 also depicts the add index 203 and the retrieve index 202 associated with the circular array. The elements of the circular array are referenced by these indices which are normally adjusted by incrementing in order to reference the next succeeding element in sequential order. Alternately, the elements could be referenced by some other means such as a pointer or offset. Thee means can be generically referred to as the add reference and retrieve reference. When the last element of the array is referenced by the index, the next succeeding element to be referenced becomes the very first element of the array. Moreover, the index is adjusted to reference the first element in this case. This notion of wrapping the index is well-known (using the modulus operation).

The add process maintains an unshared or private add index (more generally a reference) for each circular array to which it has add privilege. Similarly, the retrieve process maintains its own unshared retrieve index for each circular array for which it has retrieve privilege.

There are two preferred methods of setting and resetting the permission flags which will now be described, including the initialization (start-up) steps for one such circular array.

Initialization requires that one of the processes allocate the circular array in shared memory with the desired number of elements (exceeding the number of resources) and element size and reset the permission flags in all elements of the array. The add process must initialize its add index to reference the first element of the array. The retrieve process initializes its retrieve index to reference the same first element of the circular array.

After initialization, the add and retrieve processes operate independently and asynchronously on the circular array. See FIG. 3A showing a flow chart for the steps to be executed by the add process in order to add a resource to the circular array. When the add process wishes to add a permission grant for a resource, it references the element of the circular array using the current value of its add index 303. The add process enters (stores) the resource handle in the element 304, sets the accompanying permission flag 305 and adjusts its add index to reference the next element 306 as described above. The storing of the resource handle and setting the permission flag can be accomplished as a single step.

See FIG. 3B showing a flow chart for the steps to be executed by the retrieve process in order to retrieve a resource from the circular array. When the retrieve process wants to retrieve a permission grant for a resource controlled by the circular array, it references the element of the circular array using the current value of its retrieve index 310. The retrieve process tests the permission flag of the element 311. If the flag is set, the retrieve process reads the accompanying resource handle 312, resets the permission flag 313 and adjusts its retrieve index to reference the next element of the circular array 314. If the permission flag is not set, the retrieve process must retry for the resource at some later time 315.

See FIG. 3C for examples of a non-empty 320 and empty 321 circular array.

Method B:

Initialization requires that one of the processes allocate the circular array in shared memory with the desired number of elements (exceeding the number of resources) and element size and reset the permission flag of only the first element of the array. The add process must initialize its add index to reference the first element of the array. The retrieve process initializes its retrieve index to reference the same first element of the circular array.

After initialization, the add and retrieve process operate independently and asynchronously on the circular array.

See FIG. 4A showing a flow chart for the steps to be executed by the add process in order to add a resource to the circular array. When the add process wishes to add a permission grant for a resource, it first saves a copy of the current value of the add index 403 and adjusts its add index to reference the next element 404 as described above. It references this next element of the circular array using this value of its add index and resets the permission flag of this element 405. The add process now uses the saved copy of the add index to reference the current element of the circular array and enters (stores) the resource handle in the element 406 and sets the accompanying permission flag 407. The storing of the resource handle and setting the permission flag can be accomplished as a single step.

See FIG. 4B showing a flow chart for the steps to be executed by the retrieve process in order to retrieve a resource from the circular array. When the retrieve process wants to retrieve a permission grant for a resource controlled by the circular array, it references the element of the circular array using the current value of its retrieve index 410. The retrieve process tests the permission flag of the element 411. If the flag is set, the retrieve process reads the accompanying resource handle 412 and adjusts its retrieve index to reference the next element of the circular array 413. If the permission flag is not set, the retrieve process must retry for the resource at some later time 414.

See FIG. 4C for examples of a non-empty 420 and empty 421 circular array.

## Claims

1. A method of sharing a maximum of N serially reusable resources among a set of independent processes, comprising the steps of:

(a) allocating circular arrays, each of said circular arrays allocated in memory space shared between a pair of said processes with one of said pair designated an add process and with the other of said pair designated a retrieve process, each of said circular arrays having at least N + 1 array elements;

(b) adding each permission grant to an array element which is referenced by an unshared add reference which corresponds to a circular array, each said permission grant having a permission flag and a resource handle, said permission flag, when set, indicating permission to retrieve a handle and said handle indicating which one of said resources may be used, each said permission grant being added by said add process entering a resource handle into said array element, by setting said permission flag in said element and by adjusting said add reference; and

(c) retrieving each said permission grant from an array element referenced with an unshared retrieve reference which corresponds to said circular array, each said permission grant being retrieved, by said retrieve process, by testing whether said permission flag is set in said array element, and if said permission flag is set, then by accessing said resource handle in said element, resetting said permission flag, and adjusting said retrieve reference,

each said retrieve process using said resource indicated by said handle.

2. A method of sharing a maximum of N serially reusable resources among a set of independent processes, comprising the step of:

(a) allocating circular arrays, each of said circular arrays allocated in memory space shared between a pair of said processes with one of said pair designated an add process and with the other of said pair designated a retrieve process, each of said circular arrays having at least N + 1 array elements;

(b) adding each permission grant to any array element referenced by an unshared add reference which corresponds to a circular array, each said permission grant having a permission flag and a resource handle, each said permission grant being added by said add process entering a resource handle into said referenced array element, by setting said permission flag in said array element, by resetting the permission flag in the array element immediately following said referenced array element, and by adjusting said retrieve reference; and

(c) retrieving each said permission grant from an array element referenced with an unshared retrieve reference which corresponds to said circular array, each said permission grant being retrieved, by said retrieve process, by testing whether said permission flag is set in said array element, and if said permission flag is set, then by accessing the resource handle in said element, and adjusting said retrieve reference,

each said retrieve process using said resource indicated by said handle.

3. A method of sharing a maximum of N serially reusable resources among a pair of independent processes, comprising the steps of:

(a) allocating a circular array in memory space shared between said processes with one of said pair designated an add process and with the other of said pair designated a retrieve process, said circular array having at least N + 1 array elements;

(b) adding each permission grant to an array element which is referenced by an unshared add reference which corresponds to the circular array, each said permission grant having a permission flag and a resource handle, said permission flag, when set, indicating permission to retrieve a handle and said handle indicating which one of said resources may be used, each said permission grant being added by said add process entering a resource handle into said array element, by setting said permission flag in said element and by adjusting said add reference; and

(c) retrieving each said permission grant from an array element referenced with an unshared retrieve reference which corresponds to said circular array, each said permission grant being retrieved, by said retrieve process, by testing whether said permission flag is set in said array element, and if said permission flag is set, then by accessing said resource handle in said element, resetting said permission flag, and adjusting said retrieve reference,

each said retrieve process using said resource indicated by said handle.

4. A method of sharing a maximum of N serially reusable resources among a pair of independent processes, comprising the step of:

(a) allocating a circular array in memory space shared between said processes with one of said pair designated an add process and with the other of said pair designated a retrieve process, said circular array having at least N + 1 array elements;

(b) adding each permission grant to an array element referenced by an unshared add reference which corresponds to the circular array, each said permission grant having a permission flag and a resource handle, each said permission grant being added by said add process entering a resource handle into said referenced array element, by setting said permission flag in said array element, by resetting the permission flag in the array element immediately following said referenced array element, and by adjusting said retrieve reference; and

(c) retrieving each said permission grant from an array element referenced with an unshared retrieve reference which corresponds to said circular array, each said permission grant being retrieved, by said retrieve process, by testing whether said permission flag is set in said array element, and if said permission flag is set, then by accessing the resource handle in said element, and adjusting said retrieve reference,

each said retrieve process using said resource indicated by said handle.

# FIG.1A

PROCESS — 101

|
102
↓

PROCESS — 103

# FIG.1B

PROCESS — 111

112 ⌐        ⌐113
↓            ↑

PROCESS — 114

# FIG.1C

PROCESS — 121

122 ⌐
123        ⌐124
126 ⌐      ⌐125
↓ ↓ ↑

PROCESS

# FIG.1D

PROCESS — 131

132        136
133 ⌐ PROCESS  134 →  PROCESS  135

# FIG.2

CIRCULAR ARRAY

205 FRAME BUFFER POOL

201

202
RETRIEVE INDEX

203
ADD INDEX

2KB
2KB
2KB
2KB
2KB
2KB

204
ELEMENT CONTAINING { PERMISSION FLAG
RESOURCE HANDLE

EP 0 424 758 A2

# FIG.3A

```
ACQUIRE ADD INDEX ┙-303
        │
        ▼
STORE RESOURCE      ⸜-304
HANDLE IN ELEMENT
        │
        ▼
SET PERMISSION FLAG  ⸜305
    IN ELEMENT
        │
        ▼
ADJUST ADD INDEX ┙-306
```

# FIG.3B

```
310-⸜│ACQUIRE RETRIEVE INDEX│
              │
              ●───────────┐
              │        ⸜311
   315        ▼
    ⸜    ┌─────────────────┐
┌───────┐│ TEST PERMISSION │
│ DELAY ││ FLAG INTO ELEMENT│
└───────┘└─────────────────┘
   ▲  "RESET"      │
   └───────────    │ "SET"
                   ▼
        ┌─────────────────┐
   312-⸜│ READS RESOURCE  │
        │ HANDLE IN ELEMENT│
        └─────────────────┘
                 │
                 ▼
        ┌─────────────────┐
   313-⸜│ RESETS PERMISSION│
        │ FLAG IN ELEMENT │
        └─────────────────┘
                 │
                 ▼
   314-⸜│ADJUST RETRIEVE INDEX│
```

FIG.3C

CIRCULAR
ARRAY

| |
|---|
| RESET HANDLE 4 |
| RESET HANDLE 6 |
| SET HANDLE 3 |
| SET HANDLE 2 |
| SET HANDLE 4 |
| RESET HANDLE 3 |
| RESET HANDLE 6 |
| RESET HANDLE 9 |

320

RETRIEVE INDEX

ADD INDEX

CIRCULAR
ARRAY

| |
|---|
| RESET HANDLE 4 |
| RESET HANDLE 1 |
| RESET HANDLE 3 |
| RESET HANDLE 2 |
| RESET HANDLE 4 |
| RESET HANDLE 3 |
| RESET HANDLE 6 |
| RESET HANDLE 9 |

321

RETRIEVE INDEX

ADD INDEX

EP 0 424 758 A2

## FIG.4A

```
SAVE COPY OF ADD INDEX     ⌐403
    (IN SAVED INDEX)
```

```
ADJUST ADD INDEX     ⌐404
```

```
RESET PERMISSION     ⌐405
FLAG IN ELEMENT
REFERENCED BY
   ADD INDEX
```

```
STORE RESOURCE HANDLE     ⌐406
IN ELEMENT REFERENCED
   BY SAVED INDEX
```

```
SET PERMISSION FLAG     ⌐407
IN ELEMENT REFERENCED
   BY SAVED INDEX
```

## FIG.4B

```
410 ⌐ ACQUIRE RETRIEVE INDEX
```

```
414                              411
   DELAY        TEST PERMISSION
             FLAG INTO ELEMENT
   "RESET"
                      "SET"
```

```
READS RESOURCE
412 ⌐ HANDLE IN ELEMENT
```

```
413 ⌐ ADJUST RETRIEVE INDEX
```

## FIG.4C

**CIRCULAR ARRAY**

420

| RETRIEVE INDEX |
| ADD INDEX |

| SET HANDLE 4 |
| SET HANDLE 6 |
| SET HANDLE 3 |
| SET HANDLE 2 |
| SET HANDLE 4 |
| RESET HANDLE 3 |
| SET HANDLE 6 |
| SET HANDLE 9 |

**CIRCULAR ARRAY**

421

| RETRIEVE INDEX |
| ADD INDEX |

| SET HANDLE 4 |
| SET HANDLE 2 |
| SET HANDLE 3 |
| SET HANDLE 2 |
| SET HANDLE 4 |
| SET HANDLE 3 |
| RESET HANDLE 6 |
| SET HANDLE 9 |

EP 0 424 758 A2